Europäisches Patentamt

European Patent Office

Office européen des brevets

(19)

(11) Numéro de publication : **0 035 952**
**B1**

(12) **FASCICULE DE BREVET EUROPÉEN**

(45) Date de publication du fascicule du brevet :
11.12.85

(51) Int. Cl.⁴ : **B 23 Q   3/157**

(21) Numéro de dépôt : 81420028.3

(22) Date de dépôt : 03.03.81

(54) **Dispositif changeur automatique d'outils, adaptable sur machines-outils à broche verticale ou horizontale, et les moyens automatiques de préhension et de positionnement desdits outils dans les broches des machines-outils.**

(30) Priorité : 04.03.80 FR 8005680
23.05.80 FR 8012000

(43) Date de publication de la demande :
16.09.81 Bulletin 81/37

(45) Mention de la délivrance du brevet :
11.12.85 Bulletin 85/50

(84) Etats contractants désignés :
AT DE GB NL SE

(56) Documents cités :
DE-A- 2 759 093
FR-A- 1 444 093
FR-A- 1 487 296
FR-A- 1 579 286
FR-A- 2 284 410
FR-A- 2 391 028
FR-E-    89 602
US-A- 3 621 546
US-A- 3 779 391
US-A- 4 122 598
US-E-    26 827

(73) Titulaire : Moulin, Georges
17 bis, rue de Terrenoire
F-42100 Saint Etienne (FR)

(72) Inventeur : Moulin, Georges
17 bis, rue de Terrenoire
F-42100 Saint Etienne (FR)

(74) Mandataire : Dupuis, François
Cabinet Charras 3 Place de l'Hôtel-de-Ville
F-42000 St.Etienne (FR)

EP 0 035 952 B1

Jouve, 18, rue St-Denis, 75001 Paris, France

## Description

L'invention concerne un dispositif chargeur automatique d'outils, adaptable sur toutes machines-outils à broche verticale ou horizontale, et les moyens automatiques de préhension et de positionnement desdits outils dans les broches des machines-outils.

Selon l'invention, le changeur peut être soit intégré à la machine outil, soit rapporté ultérieurement et adapté sur cette dernière.

On connaît selon le brevet US-E-26872 un dispositif changeur automatique d'outils adaptable sur toutes machines outils et comportant un magasin de stockage d'outils, animé d'un mouvement rotatif avec moyen pour la préhension, le dégagement et la mise en place de l'outil choisi dans la broche de la machine outil ; le magasin de stockage d'outils comportant périphériquement un barillet rotatif (113) avec des joues et entre lesquelles sont disposés des axes de guidage (118, 119) pour recevoir à coulissement des secteurs indépendants (90) porte outils avec moyen de préhension et de serrage.

On connaît également le brevet Français 1579286 où chaque outil est stocké verticalement dans le magasin pour être transféré horizontalement dans la broche de la machine.

Le but recherché et atteint selon la présente invention était de réaliser un dispositif automatique, avec des mouvements de chaque secteur étroitement combinés pour assurer successivement leur déplacement en hauteur, lors de leur positionnement circulaire précis en fonction de l'outil à saisir. D'autre part on a recherché une sécurité de fonctionnement en assurant un verrouillage des secteurs en attente dans le magasin en position basse, en dehors de leur préhension fonctionnelle, chaque secteur restant autonome en étant muni de moyens de préhension de l'outil dont la commande d'ouverture s'effectue en combinaison lors du positionnement circulaire et en hauteur précis dudit secteur, une seule commande d'ouverture intervenant.

Le dispositif changeur automatique d'outils adaptable sur machine-outils, avec un magasin de stockage d'outils sous forme d'un barillet rotatif, porté par un fourreau axial ce barillet rotatif étant muni circulairement d'une pluralité de secteurs périphériques et ayant respectivement des pinces de préhension de l'outil, le fourreau axial étant muni de moyens de déplacement linéaire de chaque secteur d'une première position dans laquelle se trouvent lesdits secteurs non utilisés pour le changement d'outils vers une deuxième position pour le transfert de l'outil sur la broche de la machine-outil ou réciproquement, est caractérisé par le fait que dans leur première position les secteurs sont guidés circulairement et verrouillés par un anneau de verrouillage concentrique au fourreau axial, que le moyen de déplacement linéaire du secteur consiste en un vérin (14) qui coopère avec l'anneau de verrouillage de manière que le vérin autorise le déverrouillage et le déplacement du secteur considéré et en ce que ledit fourreau axial, comporte un vérin unique fixé sur ledit fourreau axial, ce vérin étant muni d'une tête pour la coopération avec les pinces de préhension de l'outil dans la deuxième position.

Ces caractéristiques et d'autres encore ressortiront bien de la suite de la description.

Pour fixer l'objet de l'invention, sans toutefois le limiter, aux figures des dessins annexés :

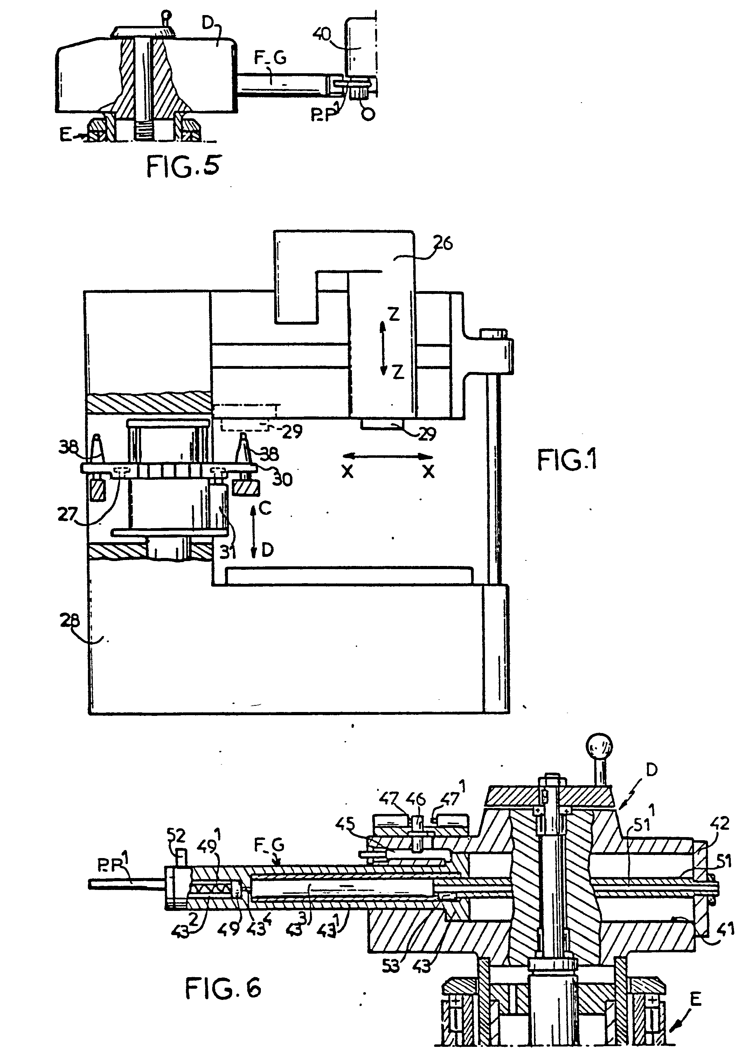

La figure 1 est une vue de profil d'une machine-outil, avec coupe partielle, illustrant schématiquement l'adaptation du changeur d'outil ; le changeur étant positionné sur le bâti de la machine.

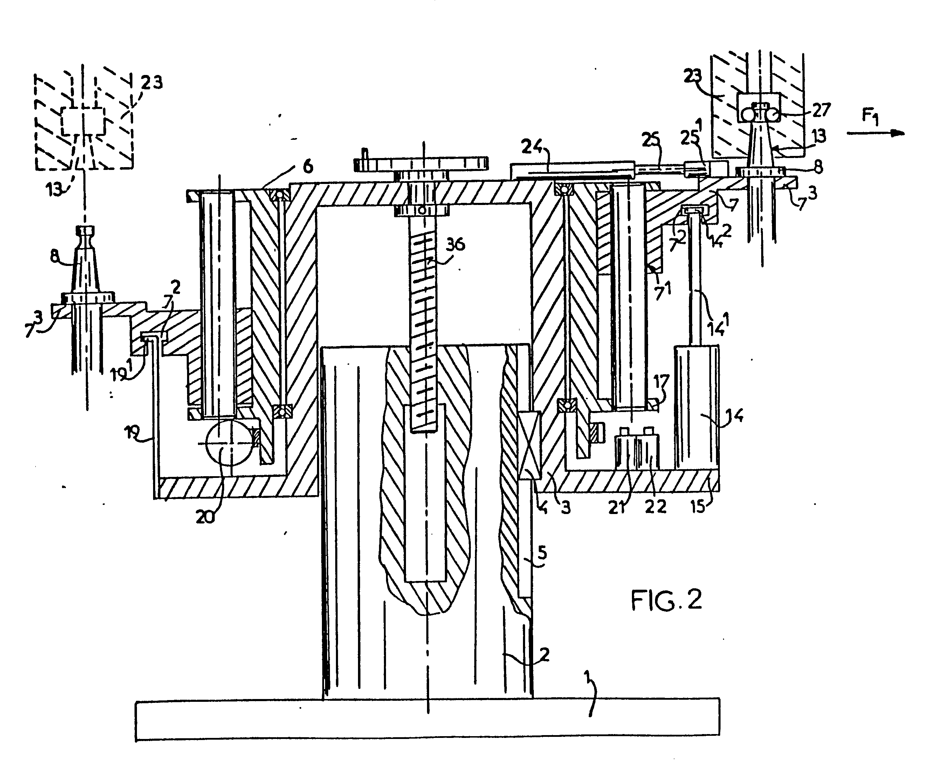

La figure 2 est une vue à grande échelle et en coupe illustrant le changeur selon l'invention.

La figure 3 est une vue de dessus du magasin du changeur d'outils.

La figure 4 est une vue à grande échelle illustrant le positionnement du porte-outil sur l'un des secteurs constituant le magasin.

La figure 5 illustre schématiquement une variante du dispositif de préhension d'outils constitué de deux pinces.

La figure 6 est une vue en coupe à grande échelle, selon la figure 5.

La figure 7 est une vue de dessus selon la figure 6.

Les figures 8, 9, 10, 11 sont des vues purement schématiques illustrant la chaîne cinématique de fonctionnement du changeur d'outils par rapport à la broche d'une machine outils.

Afin de rendre plus concret l'objet de l'invention, on le décrit maintenant d'une manière non limitative en se référant aux exemples de réalisation illustrés aux figures des dessins.

Le changeur d'outil se compose d'un socle 1 servant à fixer l'appareil et à recevoir l'ensemble des organes le constituant, par l'intermédiaire d'une glissière 2 munie d'un système permettant le déplacement axial d'un fourreau 3. Ce déplacement sert au réglage et à la mise en position des cônes 8 des porte-outils par rapport à la broche de la machine 23. Ce fourreau est guidé radialement par une clavette 5 coulissant dans une rainure 5 ou tout autre système équivalent. En variante, le déplacement du fourreau 3 peut être assuré au moyen de vis et écrous 3b, hydrauliquement, électriquement, manuellement ou automatiquement.

Ce fourreau 3 supporte un barillet rotatif 6 recevant sur sa périphérie, un nombre quelconque de secteurs 7, l'ensemble de ces secteurs formant une couronne, base du magasin d'outils.

Chaque secteur porte-outil comprend dans son épaisseur axiale un alésage $7^1$ autorisant son engagement sur un axe de guidage 16 ; ledit secteur présente extérieurement, un prolongement étagé en deux parties, sur la première partie intermédiaire étant réalisée une rainure selon un profil en arc de cercle $7^2$, sur la seconde partie (7³), étant agencée pour recevoir le moyen de serrage du porte-outil.

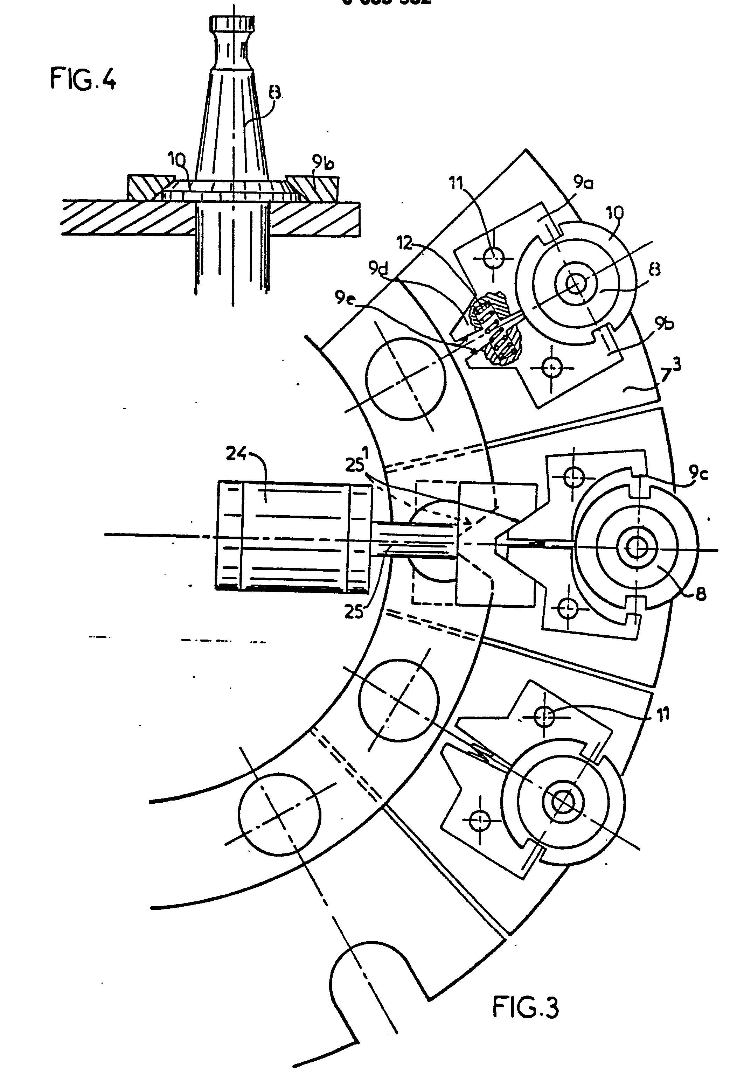

Chaque secteur reçoit un outil maintenu en position et en orientation par un système de préhension illustré figure 3, qui peut être constitué de deux demi-pinces 9A-9B dont les extrémités internes forment crochets 9C afin de maintenir et de positionner l'outil par sa collerette 10. Le profil de la pince est étudié pour maintenir l'outil radialement, figure 4. Les demi-pinces sont maintenues latéralement par les axes 11 qui leur servent de point de rotation. Un ressort 12 maintient les crochets 9C fermés, lorsque la pince est en position de repos.

La partie arrière 9D des deux demi-pinces présente un profil saillant conique. Un vérin hydraulique à double effet 24, fixé à demeure sur le fourreau 3, provoque l'ouverture des pinces par suite du développement de sa tige 25 dont l'embout 25¹ est profilé de manière complémentaire au profil arrière 9D des pinces, en faisant office de came. L'embout 25¹ s'engage et prend appui sur les parties arrière des pinces, provoquant progressivement leur ouverture en comprimant le ressort 12 disposé entre les parois en regard 9E.

Les secteurs 7 ont un mouvement de rotation donné par l'entraînement du barillet 6. La commande de ce mouvement peut être un système à rochet, à came, à croix de malte, par moteur hydraulique, électrique ou autre, sous condition qu'elle permette de positionner chaque secteur avec précision. La rotation et le positionnement du barillet ont pour but de mettre dans le même axe angulaire, la queue de l'outil et le cône de la broche devant recevoir cet outil.

Selon une autre caractéristique, les secteurs 7 reçoivent également un mouvement rectiligne alternatif permettant, après la mise en position angulaire de l'outil 8, de l'engager dans le cône de la broche 13. Le mouvement est donné par un vérin à double effet 14 fixé sur un support 15 solidaire du fourreau 3 et dont la tige 14¹ commande le secteur 7 au moyen d'une liaison qui peut être une rainure circulaire 7² en forme de T femelle, dans laquelle s'engage l'embout 14⁴ de la tige de vérin en forme de T mâle. Les secteurs 7 sont guidés dans leur mouvement rectiligne par un axe 16 maintenu par deux joues 17-18 solidaires du barillet 6.

Selon une autre caractéristique, le système de sécurité interdit le déplacement des secteurs s'ils ne sont pas commandés par le vérin 14. Cette sécurité est constituée d'un anneau 19 ayant une collerette 19¹ s'engageant dans la rainure 7² en forme de T, la collerette prenant place dans l'aile du T ; il apparaît qu'aucun déplacement rectiligne des secteurs n'est possible, alors que l'ensemble du magasin d'outils peut librement tourner. Au droit du vérin de commande 14, une portion de l'anneau 19 a été supprimée afin de permettre le déplacement en hauteur du secteur 7. Des micro-contacts 21-22 garantissent la bonne orientation du barillet ainsi que la mise en position correcte des secteurs.

On décrit maintenant le fonctionnement du changeur. En position de départ, le cône 13 de la broche 23 sans outil, est présenté dans l'axe de l'outil à charger 8. Le système de blocage 27 dans le cône de la broche, est en position ouverte. Un ordre étant donné, le vérin 14 déplace le secteur choisi verticalement, pour introduire le cône de l'outil 8 dans le cône de la broche 13. Le système de blocage dans le cône de la broche saisit l'outil et le fixe. Le vérin 24 déplace la came 25¹ qui ouvre les pinces 9A - 9B, libérant l'outil. La broche chargée peut être dégagée suivant la flèche F1.

Pendant tout le temps de travail de la broche, les vérins 14 et 24 sont sous pression. Un système de sécurité arrête immédiatement le fonctionnement de la machine si l'un quelconque de ces vérins n'est pas en pression normale.

Pour le changement des outils, la broche revient en position initiale, engageant l'outil dans son logement sur le secteur 7³. Le vérin 24 se retire, dégageant la came 25¹, puis sous l'action du ressort 12, les deux demi-pinces se referment et maintiennent l'outil.

Le système d'accrochage situé dans la broche de la machine s'ouvre et éjecte l'outil. Le vérin 14 se rétracte, entraînant le secteur 7 et l'outil en position basse, dégageant complètement le cône de l'outil. Le barillet 6 est alors entraîné d'une fraction de tour, par le dispositif 20, mettant l'outil en position de changement pour un nouveau cycle.

Le changeur automatique d'outils ainsi décrit peut être monté ou intégré sur tout type de machines et peut coopérer avec plusieurs dispositifs de préhension des outils.

Aux figures suivantes, 5 à 11, on a illustré un dispositif de préhension des outils, à partir du magasin d'outils ; les magasins d'outils restant le même que celui décrit et illustré précédemment.

Une tête de tourelle, mobile en hauteur et en rotation D, montée en bout d'une colonne verticale E, en regard du magasin d'outils, reçoit intérieurement deux bras de préhension F et G disposés parallèlement, mobiles en translation et comportant en bout les pinces de préhension P et P1 avec moyen de commande ; la tête D est animée d'un mouvement de rotation commandé par vérin à double effet, logé dans l'élément de base et non illustré.

Selon une chaîne cinématique déterminée, la tourelle ou tête D autorise par l'intermédiaire de la pince P ou P1 de chacun de ses bras F-G, la prise d'un outil O sur le magasin tournant 40 en vue de son dégagement par retrait desdits bras, puis, de par l'élévation en hauteur de la tourelle D et après son orientation, le redéplacement des bras F-G en vue d'obtenir dans un premier temps, la présentation de l'outil en regard de la broche K, de la machine-outils, et dans un deuxième temps, son déplacement en hauteur pour autoriser l'engagement automatique du cône de l'outil O présenté dans la broche K en vue de son accouplement par emmanchement. Ces opérations s'effectuent également dans un cycle inverse, c'est-à-dire pour le dégagement de l'outil O de la broche de la machine, en vue de son rangement sur le magasin tournant 40. On considère également que l'un des bras F ou G permet le chargement, tandis que le deuxième bras autorise le déchargement. La tête D ou tourelle reçoit transversalement les deux bras F et G disposés de préférence parallèlement et recevant en bout les pinces de préhension P et P1.

A cet effet, chaque bras est établi avec un cylindre 41 monté transversalement dans la tête D obturée à son extrémité par un couvercle 42, pour autoriser le logement à coulissement du piston 43 avec tige $43^1$, dont l'extrémité reçoit une plaque pour l'articulation de chacune des deux mâchoires opposées 44 et $44^1$ formant pinces, et à commande séparée.

Des canalisations non représentées assurent à la façon connue, la commande de déplacement hydraulique du piston 43 en translation dans les deux sens, lors du déploiement de chaque tige $43^1$, constituant directement le bras F ou G ; le piston 43 agit en fin de course, de par son épaulement, sur le talon d'un poussoir mobile 45 rappelé par ressort, qui est rendu solidaire d'un doigt vertical 46 se déplaçant en translation pour se présenter en appui sur un micro-contact 47 commandant le cycle suivant et l'ouverture ou la fermeture de la pince du bras considéré.

A cet effet, les mâchoires opposées 44 et $44^1$ formant pinces sont accouplées deux à deux par la tête 48 en forme de T, s'engageant de par ses extrémités profilées, dans des logements ou creusures correspondantes, et dont la queue cylindrique $48^1$ est vissée en bout de la tige $49^1$ du piston auxiliaire 49 logé dans l'alésage $43^2$ de la partie avant de la tige $43^1$ du piston 43 de commande de déplacement du bras.

Le piston auxiliaire 49 rappelé automatiquement en position de fermeture des mâchoires, par l'intermédiaire d'un ressort 50, est alimenté indépendamment par le fluide hydraulique circulant dans le canal $51^1$ d'une tige 51 montée axialement de par son extrémité, sur le couvercle 42 et dont la périphérie extérieure permet le coulissement de l'alésage de la tige $43^1$ du piston 43.

Le fluide arrivant par le canal $51^1$, s'engage dans l'alésage $43^3$ pour agir sur le piston 49 par l'intermédiaire d'une ouverture axiale $43^4$, à seule fin de commander le déplacement longitudinal en translation du piston 49 et de la tête 48, de manière à permettre le pivotement opposé des mâchoires 44 et $44^1$, en vue de leur ouverture ou fermeture simultanée qui s'effectue comme indiqué en fin de course de déploiement de la tige $43^1$ agissant de par le poussoir 45 sur le micro-contact 47.

Dans le cas contraire de fermeture du bras $43^1$, un taquet 52 solidaire de son extrémité, agit en fin de fermeture, sur l'extrémité extérieure du poussoir mobile 45, pour commander inversement le doigt vertical 46 agissant sur le micro-contact opposé $47^1$, en vue d'autoriser le cycle suivant.

On note également que le positionnement circulaire de chaque tige $43^1$ formant bras F ou G, est assuré par clavette 53 qui permet également son coulissement longitudinal.

Il faut également noter que les mâchoires 44 et $44^1$ reçoivent à leur extrémité supérieure, les doigts de préhension 54, s'engageant lors de la fermeture, dans les encoches établies sur la collerette de chaque outil O.

La tête D ou tourelle étant équipée de ses bras de préhension F et G, peut se déplacer verticalement en translation et tournant dans un plan horizontal.

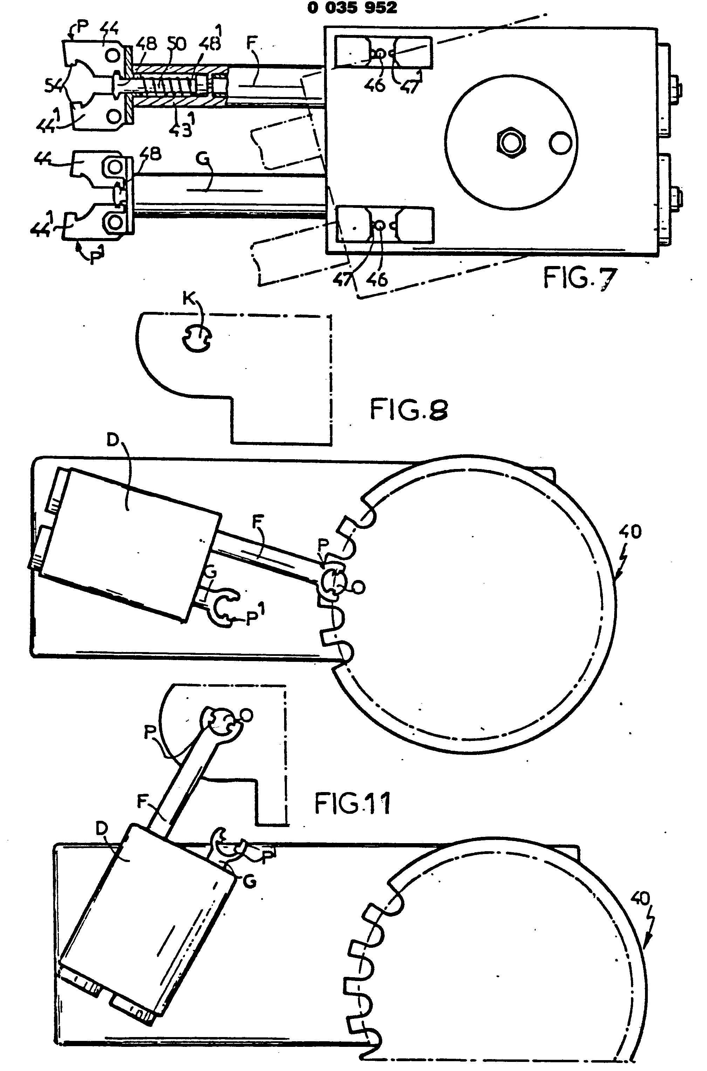

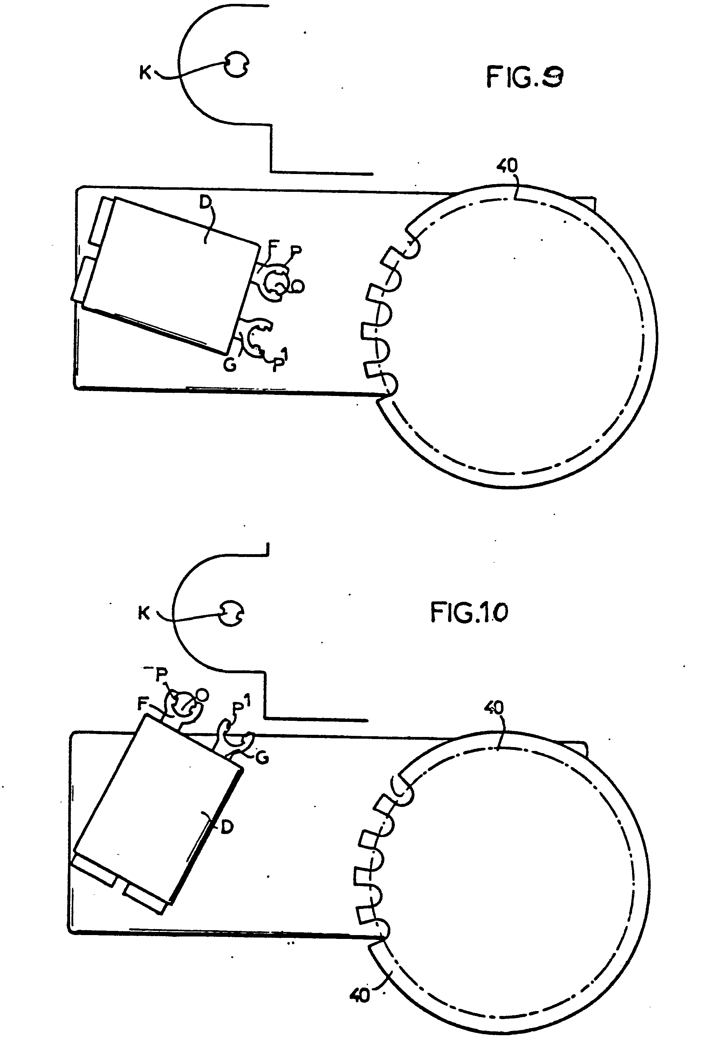

Selon la figure 8, la tête ou tourelle D occupe la position basse et le bras F avancé prend par sa pince P, l'outil O sur le magasin tournant 40.

Selon la figure 9, le bras F sollicité par le piston 43, est retiré contre la tourelle D avec un outil en prise O, saisi entre ses mâchoires, la tourelle est ensuite commandée en rotation par tous moyens appropriés, en vue de présenter le bras F en regard de la broche K de la machine-outils, selon la figure 10.

La tête D est ensuite déplacée en hauteur suivant la course d'approche au-dessous du plan de la broche K, puis le bras F présente de par son déplacement en translation, l'outil O coaxialement à ladite broche K, figure 11 en vue de son emmanchement par suite de la course de déplacement immuable en hauteur de la tête D sollicitée par une commande appropriée.

L'outil O est ainsi mis en place sur la broche K de la machine-outils, suivant la course.

L'opération inverse s'effectue avec le retrait du bras F par rapport à la tourelle D qui pivote partiellement pour la mise en place du bras de déchargement G dudit outil par rapport à la broche K, lors de son changement.

Il est bien évident que les commandes hydrauliques et électriques de ce changeur d'outils restent réalisées à la façon connue et qu'un seul bras peut être utilisé.

Les avantages ressortent bien de la description. En particulier on souligne la conception simple et fiable du changeur d'outils, ses différentes possibilités d'adaptation sur des machines-outils et les moyens de préhension et de distribution des outils du changeur à la broche de la machine.

**Revendications**

1. Dispositif changeur automatique d'outils adaptable sur machine-outils, avec un magasin de stockage d'outils sous forme d'un barillet rotatif (6), porté par un fourreau axial (3) ce barillet rotatif (6) étant muni circulairement d'une pluralité de secteurs (7) périphériques et ayant respectivement des pinces de préhension (ga, gb) de l'outil, le fourreau axial étant muni de moyens de déplacement linéaire de chaque secteur d'une première position dans laquelle se trouvent lesdits secteurs (7) non utilisés pour le changement d'outils vers une deuxième position pour le transfert de l'outil sur la broche de la machine-outil ou réciproquement, caractérisé par le fait que dans leur première position les secteurs (7) sont guidés circulairement et verrouillés par un anneau (19) de verrouillage concentrique au fourreau axial (3), que le moyen de déplacement linéaire du secteur (7) consiste en un vérin (14) qui coopère avec l'anneau de verrouillage de manière que le vérin autorise le déverrouillage et le déplacement du secteur (7) considéré et en ce que ledit fourreau axial (3), comporte un vérin unique (24) fixé sur ledit fourreau axial (3), ce vérin étant muni d'une tête (25') pour la coopération avec les pinces de préhension de l'outil dans la deuxième position.

2. Dispositif changeur automatique d'outils selon 1, caractérisé en ce que chaque secteur indépendant (7) reçoit un moyen de préhension composé de deux pinces symétriques articulées (9A) et (9B) rappelées en position de fermeture par ressort et dont les extrémités internes forment crochets diamétraux (9C) pour maintenir et positionner circulairement les encoches établies sur la collerette du porte-outil, tandis que leurs extrémités arrières forment symétriquement un profil conique (9D) pour permettre leur commande d'ouverture symétrique par l'effort de poussée et de centrage exercé par la tête de commande (25¹) mobile radialement.

3. Dispositif changeur automatique d'outils, selon 1, caractérisé en ce qu'un moyen unique (24) du type vérin, fixé sur le fourreau (3) permet, par suite du développement de sa tige (25) dont l'embout (25¹) est profilé en forme de came de manière complémentaire au profil arrière (9D) des pinces, et de l'engagement de l'embout (25¹) sur ces dernières, de provoquer progressivement, l'ouverture des pinces en comprimant le ressort de rappel (12) en libérant le porte-outils.

4. Dispositif changeur automatique d'outils selon 1, caractérisé en ce que le support (15) formé par la base du magasin (3) autorise la fixation concentrique d'un tambour de verrouillage (19) dont la bordure supérieure (19¹) forme rail de guidage par rapport à une rainure correspondante (19¹) formée sur chaque secteur (19) en vue d'assurer leur verrouillage simultané en hauteur en position basse d'attente et d'emmagasinage ; ledit tambour (19) présentant une interruption de la dimension d'un secteur pour le passage de la tête profilée (14¹) d'un vérin (14) qui s'engage librement dans la rainure (19¹) du secteur sollicité en vue de permettre son déplacement en hauteur après son positionnement et son blocage circulaire par l'intermédiaire de micro-contacts (21-22) fixés sur le support (15).

5. Dispositif changeur horizontal d'outils selon 1, caractérisé en ce qu'il comprend une tête (D) mobile verticalement et en rotation avec deux bras de préhension (F-G) destinés l'un au chargement de l'outil, l'autre à son évacuation, disposés horizontalement et parallèlement, tout en étant mobiles en translation ; lesdits bras (F-G), étant munis en bout de pinces (P-P1) à leurs extrémités, pour saisir, dégager ou engager les outils à transférer, montés dans la broche de la machine-outils, en vue de leur transfert jusqu'au magasin d'outils (40) ou réciproquement.

6. Dispositif changeur automatique d'outils selon 5, caractérisé en ce que chaque bras de préhension est établi avec un cylindre (41) monté transversalement dans la tête (D) mobile, dans lequel se déplace un piston principal (43) mobile dans les deux sens, dont la tige (43¹) autorise en bout l'articulation de deux mâchoires (44-44¹) opposées formant pince de préhension ; ledit piston principal guidé longitudinalement coopère en fin de course avec un poussoir (45) mobile, se déplaçant en translation entre deux micro-contacts (47-47¹) électriques de commande d'ouverture ou de fermeture des pinces de préhension (P-P1).

7. Dispositif changeur automatique d'outils selon 6, caractérisé en ce que les mâchoires (44-44¹) rappelées par ressort (50) en position de fermeture, sont accouplées deux à deux par une tête (48) coulissante en forme de T, dont la queue (48¹) est rendue solidaire de la tige (49¹) d'un piston auxiliaire (49) logé dans la partie avant (43²) de la tige du piston de commande principal (43) de déploiement du bras, et dont la commande hydraulique d'ouverture s'effectue par le poussoir mobile (45) agissant en fin de course de déploiement sur le micro-contact (47) ; un taquet (52) solidaire de l'extrémité du piston principal agissant inversement lors de la fermeture sur le poussoir mobile qui agit sur le micro-contact (47¹) opposé, en vue d'autoriser le cycle suivant.

**Claims**

1. Automatic tool changing device for adaptation to machine-tools, with a tool storage magazine in the form of a rotary barrel (6) supported by an axial case (3), said rotary barrel (6) being provided circularly with a plurality of peripheral sectors (7) having respectively the tool gripping clamps (ga, gb), the axial case being provided with means for the rectilinear shifting of each sector from a first position in which said sectors (7) not in use for changing tools are placed toward a second position for the transfer of the tool on the spindle of the machinetool or vice versa, characterized in that the sectors (7), in their first position, are guided circularly and interlocked by the lock ring (19) which is concentric with the axial case (3) ; the means for the rectilinear shifting of the sector (7) consists of a pressure cylinder (14) which cooperates with the lock ring so that the unlocking and the shifting of the sector (7) concerned will be permitted by the pressure cylinder, the device being also characterized in that said axial case (3) includes a sole pressure cylinder (24) secured to said axial case (3), this pressure cylinder being provided with a head (25') for cooperation with the gripping clamps of the tool in the second position.

2. Automatic tool changing device as claimed in claim 1, characterized in that each independent sector (7) accommodates a gripping means consisting of two hinged symmetrical clamps (9A) and (9B) returned by spring to the closed position and having internal ends which form diametral hooks (9C) for maintaining and positioning circularly the notches established on the collar of the tool-holder, while the external ends form symmetrically a tapering contour (9D) in order to permit the actuation for the simultaneous opening of said clamps through the urging and centering thrust exercised by the radially movable actuating head (25$^1$).

3. Automatic tool changing device as claimed in claim 1, characterized in that a sole means (24) of the pressure cylinder type, secured to the case (3), owing to the development of the rod (25) thereof, the ferrule (25$^1$) of which is contoured in the form of·a cam in a manner which is complementary to the rear contour (9D) of the clamps, and owing to the engagement of the ferrule (25$^1$) on the latter, permits the clamps to be opened gradually, by compressing the return spring (12) with release of the tool-holder.

4. Automatic tool changing device as claimed in claim 1, characterized in that the support (15) formed by the bottom of the magazine (3) permits the concentric fastening of a locking drum (19) the upper edge (19$^1$) of which forms a guide rail relative to a corresponding groove (19$^1$) formed on each sector (19) for the simultaneous vertical interlocking thereof in the lower waiting and storing position, said drum (19) having an interruption of the size of a sector for the passage of the contoured head (14$^1$) of a pressure cylinder (14) which is freely engaged within the groove (19$^1$) of the sector which is stressed for the vertical shifting thereof after the positioning and the circular interlocking thereof through the intermediary of micro-contacts (21-22) secured on the support (15).

5. Horizontal automatic tool changing device as claimed in claim 1, characterized in that said device includes a head (D) movable vertically and rotatably with two gripping arms (F-G), one of said arms being intended for loading the tool and the other one for discharging same, the arms being disposed horizontally and parallel while being movable for translation, said arms (F-C) being provided at the ends thereof with clamps (P-P1) for gripping, releasing or engaging the tools to be transferred, mounted in the spindle of the machinetool, for the transfer of said tools up to the tool magazine (40) or vice versa.

6. Automatic tool changing device as claimed in claim 5, characterized in that each gripping arm is established with a cylinder (41) mounted transversely within the mobile head (D), in which there is mounted for reciprocating motion a main piston (43) movable in both directions, the rod (43$^1$) of said piston permitting at the end thereof the linking of two jaws (44-44$^1$) facing each other and forming a gripping clamp, said main piston being guided longitudinally and cooperating at the end of the travel thereof with a mobile pusher (45) with is shifted for translation between two microcontacts (47-47$^1$) actuating electrically the opening or the closing of the gripping clamps (P-P1).

7. Automatic tool changing device as claimed in claim 6, characterized in that the jaws (44-44$^1$) returned by the spring (50) to the closing position, are coupled two by two by means of a slidable T-shaped head (48), the shank (48$^1$) of which is made fast with the rod (49$^1$) of an auxiliary piston (49) housed within the front part (43$^2$) of the rod of the main piston (43) for controlling the shifting of the arm, the hydraulic control for opening the jaws being effected by the mobile pusher (45) actuating on completion of the spreading out travel thereof the micro-contacts (47), a cleat (52) integral with the end of the main piston actuating in a reverse manner the mobile pusher during the closing step, said pusher actuating in turn the opposed micro-contact (47$^1$) to permit the next cycle to be performed.

## Patentansprüche

1. Auf Werkzeugmaschinen anwendbare, automatische Werkzeugwechselvorrichtung mit einem Werkzeugvorratsmagazin, der als durch eine achsrechte Laufbuchse (3) getragene drehbare Trommel (6) gebildet ist, die um den Umfang herum mit einer Vielzahl von Umfangssektoren (7) versehen ist, die jeweils Greiferzangen (ga, gh) für das Werkzeug aufweisen, wobei die achsrechte Laufbuchse mit Mitteln zur Linearverschiebung jedes Sektors versehen ist, und die Linearverschiebung von einer ersten Stellung aus, in welcher sich die für das Werkzeugauswechseln nicht eingesetzten Sektoren (7) befinden, ·nach einer zweiten Stellung für das Verlagern des Werkzeugs auf die Spindel der Werkzeugmaschine und umgekert erfolgt, dadurch gekennzeichnet dass die Sektoren (7), in ihrer ersten Stellung, um den Umfang hereum durch einen Sperring (19) geführt und gesperrt werden, der mit der achsrechten Laufbuchse (3) konzentrisch ist, dass das Mittel·zur Linearverschiebung des Sektors (7) aus einem Druckzylinder (14) besteht, der mit dem Sperring derart zusammenwirkt, dass der Druckzylinder die Entsperrung und die Verschiebung des entsprechenden Sektors (7) ermöglichen wird, und dass die genannte achsrechte Laufbuchse (3) einen einzigen Druckzylinder (24) aufwist, der auf der besagten achsrechten Laufbuchse (3) befestigt wird, und der mit einem Kopf (25') zur Zusammenwirkung mit den Greiferzangen für das Werkzeug in der zweiten Stellung versehen ist.

2. Automatische Werkzeugwechselvorrichtung nach Anspruch 1, dadurch gekennzeichnet, dass jeder unabhängige Sektor (7) ein aus zwei symmetrischen gelenkigen Zangen (9A) und (9B) bestehendes Greifermittel aufnimmt, die nach der Schliesstellung durch eine Feder rückgeführt werden und deren Innenenden die diametralen Haken (9C) zum kreisgerechten Halten und Positionieren der auf dem Bund des Werkzeughalters vorgesehenen Einschnitte bilden, während die rückwärtigen Enden der genannten Zangen symmetrisch einen kegeligen Profil (9D) bilden, damit die Steuerung zur symmetrischen Öffnung der Zangen durch die Schub- und Zentrierbeanspruchung des radial beweglichen Steuerkopfs (25¹) ermöglicht wird.

3. Automatische Werkzeugwechselvorrichtung nach Anspruch 1, dadurch gekennzeichnet, dass die fortschreitende Öffnung der Zangen bei Zusammendrücken der Rückholfeder (12) mit Freimachen des Werkzeugshalters durch ein einziges, als einen Druckzylinder gebildetes, auf der Laufbuchse (3) befestigtes Mittel (24) aufgrund des Ausfahrens dessen Stange (25) bewirkt wird, wobei das Endstück (25¹) dieser Stange als eine Kurve in ergänzender Weise zum Hinterprofil (9D) der Zangen profiliert ist, und dass die fortschreitende Öffnung der Zangen auch aufgrund des Eingreifens des Endstücks (25¹) der Stange auf die genannten Stangen ermöglicht wird.

4. Automatische Werkzeugwechselvorrichtung nach Anspruch 1, dadurch gekennzeichnet, dass der durch die Grundlage des Magazins (3) gebildete Träger (15) die konzentrische Befestigung einer Sperrtrommel (19) gestattet, derer Oberumrandung (19¹) eine Führungsschiene in bezug auf eine entsprechende Rille (19¹) bildet, die auf jedem Sektor (19) vorgesehen ist, um die gleichzeitige Höhensperrung der Sektoren in der Warte- und Aufspeicherungstiefstellung zu bewirken, und dass die genannte Trommel (19) eine Unterbrechung von gleichem Masse wie ein Sektor für das Durchfahren des Profilierkopfs (14¹) eines Druckzylinders (14) aufweist, der in die Rille (19¹) des beanspruchten Sektors frei eingreift, um die Höhenverstellung desselben nach dessen Positionieren und kreisgerechtem Sperren durch Vermittlung von auf dem Träger (15) befestigten Mikrokontakten (21-22) zu ermöglichen.

5. Waagerechte automatische Werkzeugwechselvorrichtung nach Anspruch 1, dadurch gekennzeichnet, dass diese Vorrichtung einen vertikal und drehbar beweglichen Kopf (D) mit zwei Greiferarmen (F-G), der eine für das Beschicken des Werkzeugs, der andere für den Auswurf des Werkzeugs, aufweist, die waagerecht und parallel, jedoch verlagerungsbeweglich angeordnet sind, wobei die genannten Arme (F-G) an den Enden derselben mit Zangen (P-P1) zum Greifen, Freimachen oder Eingreifen der zu verlagernden, in der Spindel der Werkzeugmaschine montierten Werkzeuge versehen sind, damit die Werkzeuge nach dem Werkzeugmagazin und umgekehrt verlagert werden.

6. Automatische Werkzeugwechselvorrichtung nach Anspruch 5, dadurch gekennzeichnet, dass jeder Greiferarm mit einem in dem beweglichen Kopf (D) in die Quere montierten Zylinder (41) vorgesehen wird, in welchem ein beweglicher Hauptkolben (43) sich in beiden Richtungen hin- und herbewegt, dessen Stange (43¹) am Ende derselben die gelenkige Anordnung zweier entgegengesetzten Backen (44-44¹) zur Bildung von Greiferzangen gestattet, wobei der besagte, länglich geführte Hauptkolben bei Beendigung seiner Hubbewegung mit einem beweglichen Drückschieber (45) zusammenwirkt, der sich zwischen zwei elektrischen Mikrokontakten (47-47¹) zur Steuerung des Öffnens oder des Schliessens der Greiferzangen (P-P1) verlagerungsweise bewegt.

7. Automatische Werkzeugwechselvorrichtung nach Anspruch 6, dadurch gekennzeichnet, dass die durch eine Feder (50) in die Schliesstellung zurückgeführten Backen (44-44¹) mittels eines verschiebbaren, T-förmigen Kopfs (48) zu zwei gekoppelt sind, dessen Stiel (48¹) mit der Stange (49¹) eines in dem Vorderteils (43²) der Stange des Hauptkolbens (43) zur Steuerung des Ausfahrens des Arms untergebrachten Hilfskolbens (49) festgemacht wird, wobei die hydraulische Steuerung zum Öffnen der Backen durch den bei Beendigung der Ausfahrenbewegung auf den Mikrokontakt (47) wirkenden, beweglichen Drückschieber (45) eingesetzt wird, und ein mit dem Ende des Hauptkolbens festgemachter Zapfen (52) bei dem Schliessen auf den beweglichen Drückschieber umgekehrt wirkt, der dann den entgegengesetzten Mikrokontakt (47¹) betätigt, um den folgenden Arbeitsvorgang zu ermöglichen.

0 035 952

FIG.5

FIG.1

FIG.6

1

FIG. 2

FIG.4

FIG.3

0 035 952

FIG.7

FIG.8

FIG.11

4

FIG.9

FIG.10